(19) Europäisches Patentamt
European Patent Office
Office européen des brevets

(11) Publication number: **0 675 160 A2**

# (12) EUROPEAN PATENT APPLICATION

(21) Application number: **94115570.7**

(22) Date of filing: **04.10.94**

(51) Int. Cl.[6]: **C08K 5/00**, C08L 71/12, C08L 77/00, //(C08K5/00,5:315, 5:3435)

(30) Priority: **29.03.94 US 219158**

(43) Date of publication of application: **04.10.95 Bulletin 95/40**

(84) Designated Contracting States: **DE ES FR GB IT NL**

(71) Applicant: **GENERAL ELECTRIC COMPANY**
**1 River Road**
**Schenectady, NY 12345 (US)**

(72) Inventor: **Guilland, Jean-Francois Henri**
**General Electric Plastics B.V.,**
**P.O. Box 117**
**NL-4600 AC Bergen op Zoom (NL)**

(74) Representative: **Grever, Frederik et al**
**General Electric Plastics B.V.**
**P.O. Box 117**
**NL-4600 AC Bergen op Zoom (NL)**

## (54) Ultraviolet light stabilized polyamide compositions.

(57) Hindered amine light stabilizers and ultraviolet absorbers are incorporated into polymer matrices comprising polyamides and polyphenylene ether based compositions to produce polymer compositions which unexpectedly display superior resistances to ultraviolet light.



Rank Xerox (UK) Business Services
(3.10/3.09/3.3.4)

This application is related to copending application Serial No. [8-CB-10.736], entitled "Ultraviolet Light Stabilized Polymer Compositions".

## Field of the Invention

This invention relates to novel polymer compositions. More particularly, the polymer compositions comprise hindered amine light stabilizers as well as ultraviolet light absorbers and they unexpectedly display improved resistances to ultraviolet light.

## Background of the Invention

Polyethers and/or polymer blends which contain polyphenylene ethers (PPE) constitute an invaluable class of engineering thermoplastic resins. Resins of polyphenylene ethers are characterized by a unique combination of chemical, physical and electrical properties. For instance, they are resistant to many solvents and generally display high impact strengths. As a result of this unique combination of properties, resins of polyphenylene ethers are suitable for a broad range of commercial applications.

Efforts have been made to prepare polymer blends which, while retaining their characteristic hydrolytic stability, dimensional stability and dielectric properties, have higher heat deflection temperatures. Particularly, there is a demand for immiscible blends, like polyamide blends, which possess increased heat deflection properties since they are, for instance, conventionally used in parts exposed to high temperatures in the automotive industry.

While thermoplastic resins and blends possess the above-described advantageous properties, they, like many other organic polymeric materials, are susceptible to photodegradation by ultraviolet light. The photodegradation typically results in unfavorable characteristics including yellowing and erosion of the polymer/blend surface.

It is of increasing interest to prepare thermoplastic resins and blends prepared therefrom that are resistant to photodegradation. Such preparation conventionally employs treating the surface of the polymer/blend with a coating material, whereby the coating material typically contains ultraviolet light absorbing agents such as cyanoacrylate, benzophenone and benzotriazole derivatives.

It is often discovered, however, that the ultraviolet light absorbing agents, themselves, decompose upon exposure to ultraviolet light. This invariably leads to a degradation of the favorable properties of the polymer/blend which the agents are originally employed to protect.

The instant invention, therefore, is directed to novel polyamide compositions that unexpectedly display improved resistances to ultraviolet light, wherein the novel polymer compositions comprise hindered amine light stabilizers and ultraviolet light absorbers.

## Detailed Description of the Prior Art

Efforts have been disclosed for preparing weatherable compositions. In commonly assigned U.S. Patent 5,214,085, hindered amine compounds characterized by the presence of cyclic hindered amino ether moieties are incorporated into coating compositions that may be employed as topcoats for polycarbonate substrates.

Additionally, in commonly assigned U.S. Patent 4,636,408, a polyphenylene ether resin is impregnated with a stabilizing composition comprising a hindered amine and a radiation absorber such as benzophenone.

The instantly claimed invention is patentably distinguishable from the above-described since, among other reasons, it is directed to novel polymer compositions that comprise hindered amine light stabilizers and/or ultraviolet light absorbers and they unexpectedly display improved resistances to ultraviolet light.

## Summary of the Invention

The instant invention is directed to novel polymer compositions that unexpectedly display improved resistances to ultraviolet light. Said polymer compositions comprise:

(a) an blend comprising polyamides and polyphenylene ether based compositions and at least one member selected from the group consisting of:

(b) a hindered amine; and

(c) a bis-alkylene aminocyanoacrylate ester.

Thus, the polymer compositions of the instant invention include blends comprising polyamides and polyphenylene ether based compositions and: (1) hindered amines; (2) bis-alkylene aminocyanoacrylate esters; or (3) hindered amines and bis-alkylene aminocyanoacrylate esters.

## Detailed Description of the Preferred Embodiments

A suitable hindered amine light stabilizer (hindered piperidyl ester) that may be employed in the instant invention has the formula

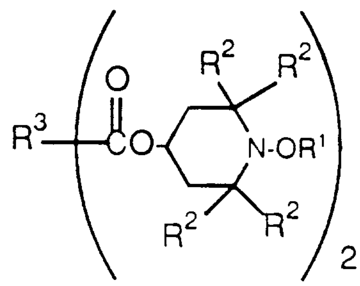

, I

wherein $R^1$ is a $C_{4-12}$ alkyl, each $R^2$ is independently a $C_{1-5}$ primary alkyl and $R^3$ is a $C_{4-12}$ alkylene.

Such hindered amine light stabilizers may be further characterized as cyclic hindered amino ether derivatives. In formula I, $R^1$ is preferably a primary alkyl such as n-butyl, n-pentyl, n-hexyl, n-octyl and n-decyl. $R^2$ is a $C_{1-4}$ primary alkyl (i.e., methyl, ethyl, n-propyl or n-butyl) with methyl being preferred and $R^3$ is a $C_{4-12}$ alkylene radical including, for example, hexamethylene, octamethylene or decamethylene, with octamethylene being preferred. When $R^1$ is n-octyl, each $R^2$ is methyl and $R^3$ is octamethylene, the compound represented by formula I has the IUPAC name of bis(1-octyloxy-2,2,6,6-tetramethyl-4-piperidinyl)sebacate and is commercially available.

The hindered amines employed in this invention are not generally considered to be radiation absorbing compounds since they typically do not absorb radiation in the ultraviolet or visible regions of the spectrum. Although the precise mechanism by which they operate is not known, it is believed that energy quenching and antioxidant (peroxide decomposition and alkyl radical termination) mechanisms are involved.

The bis-alkylene aminocyanoacrylate ester employed in this invention as an ultraviolet light absorbing agent is commercially available and may be represented by the formula

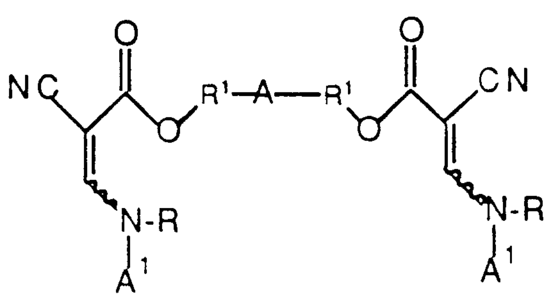

, II

wherein A is a monocyclic or polycyclic alkane and preferably cyclohexane and each $A^1$ is independently a substituted or unsubstituted aromatic radical and preferably a phenyl group and each R is independently a $C_{1-5}$ alkyl group and preferably hydrogen and each $R^1$ is independently propylene or butylene and preferably methylene.

When hindered amines are employed in the instant invention, they typically comprise less than about 5.0% by weight of the total weight of the polymer composition but preferably comprise from about 0.01 to about 3.0% by weight of the total weight of the polymer composition. Moreover, when bis-alkylene aminocyanoacrylate esters are employed, they, also, comprise less than about 5.0% by weight of the total weight of the polymer composition but preferably comprise from about 0.01 to about 3.0% by weight of the total weight of the polymer composition.

While it is preferred that the polymer compositions of the instant invention comprise polyamides and polyphenylene ether based compositions, it is also within the scope of this invention to include in said

compositions acrylic polymers including poly(methyl methacrylate), acrylonitrile styrene copolymers, styrene-acrylonitrile-butadiene copolymers, polyvinyl chloride, polystyrene, blends of polystyrene and polyphenylene ethers, butyrates, polyethylene, polycarbonates and polyesters.

The polyphenylene based ethers of the instant invention are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Furthermore, polyphenylene based ethers suitable for use in the practice of the present invention may be prepared by any of a number of processes utilizing precursor corresponding phenols or derivatives thereof. Examples for their production are disclosed in U.S. Patents 3,306,874; 3,306,875; 3,257,357; 3,257,358; 3,337,501; and 3,787,361, all incorporated herein by reference.

Additional useful polyphenylene ethers are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A proportion of the polymer molecules may contain at least one of said aminoalkyl-containing and 4-hydroxybiphenyl end groups.

The immiscible polymer blend of the instant invention also comprises polyamides in conjunction with the above-mentioned polyphenylene ether based ethers. The polyamides are obtained, for instance, by polymerizing a monoamine-monocarboxylic acid; or a lactam thereof having at least 2 carbon atoms between the amino and carboxylic acid group or by polymerizing substantially equimolar proportions of a diamine which contains at least 2 carbon atom amino groups and a dicarboxylic acid; or by polymerizing a monoaminocarboxylic acid or a lactam thereof as defined hereinabove together with substantially equimolar proportions of a diamine and a dicarboxylic acid. The dicarboxylic acid in the form of a functional derivative thereof; for example, an ester or acid chloride.

The term "substantially equimolecular" proportions (of the diamine and of the dicarboxylic acid) is used to cover both strict equimolecular proportions and slight departures therefrom which are involved in conventional techniques for stabilizing the viscosity of the resultant polyamides.

Examples of the aforementioned monoaminomonocarboxylic acids or lactams thereof which are useful in preparing the polyamides include those compounds containing from 2 to 16 carbon atoms between the amino and carboxylic acid groups, said carbon atoms forming a ring with the -CO-NH-group in the case of a lactam. As particular examples of aminocarboxylic acids and lactams there may be mentioned aminocaproic acid, butyrolactam, pivalolactam, caprolactam, capryl-lactam, enantholactam, undecanolactam, dodecanolactam and 3- and 4-aminobenzoic acids.

Diamines suitable for use in the preparation of the polyamides include straight chain and branched, alkyl, aryl and alkyl-aryl diamines. Such diamines include, for example, those represented by the general formula

$H_2N(CH_2)_nNH_2$ , II

wherein n is an integer of from 2 to 16, such as trimethylenediamine, tetramethylenediamine, pentamethylenediamine, octamethylenediamine and especially hexamethylenediamine, as well as trimethyl hexamethylene diamine, meta-phenylene diamine, meta-xlylene diamine and the like.

The dicarboxylic acids may be aromatic, for example, isophthalic and terephthalic acids. Preferred dicarboxylic acids are of the formula

HOOC-Y-COOH , III

wherein Y represents a divalent aliphatic group containing at least 2 carbon atoms, and examples of such acids are sebacic acid, octadecanedoic acid, suberic acid, glutaric acid, pimelic acid and adipic acid.

Typical examples of polyamides (Nylons) useful in the instant immiscible polymer blends include for example polyamides 4/6, 6, 6/6, 11, 12, 6/3, 6/4, 6/10 and 6,12 as well as polyamides resulting from terephthalic acid and/or isophthalic acid and trimethyl hexamethylene diamine, polyamides resulting from adipic acid and meta xylylenediamines, polyamides resulting from adipic acid, azelaic acid and 2,2-bis-(p-aminocyclohexyl)propane, semi-crystalline polyamides resulting from combinations of terephthalic and/or

isophthalic and/or adipic acids with hexamethylene diamine, semi-crystalline polyamides resulting from terephthalic and/or isophthalic acids and hexamethylene and 2-methyl pentamethylene diamines, and polyamides resulting from terephthalic acid and 4,4'-diamino-dicyclohexylmethane.Mixtures and/or copolymers of two or more of the foregoing polyamides or prepolymers, respectively, are also within the scope of the present invention. Preferred polyamides are the polyamides 6, 6/6, 6/10 and 4/6, most preferably polyamide 6/6.

It is also understood that use of the term "polyamides" herein and in the appended claims is intended to include the toughened or super tough polyamides. Super tough polyamides or super tough nylons, as they are more commonly known, are available commercially, e.g., from E.I. duPont under the tradename Zytel ST, or may be prepared in accordance with a number of U.S. patents, including, among others, Epstein, U.S. Patent 4,174,358; Novak, U.S. Patent 4,474,927; Roura, U.S. Patent 4,346,194; and Joffrion, U.S. Patent 4,251,644, herein incorporated by reference. These super tough nylons are prepared by blending one or more polyamides with one or more polymeric or copolymeric elastomeric toughening agents. Suitable toughening agents are disclosed in the above-identified U.S. patents, as well as in Caywood, Jr., U.S. Patent 3,884,882 and Swiger, U.S. Patent 4,147,740 and Gallucci et al., "Preparation and Reactions of Epoxy-Modified Polyethylene", *J. Appl. Poly. Sci.*, Vol. 27, pp. 425-437 (1982) herein incorporated by reference. Typically, these elastomeric polymers and copolymers may be straight chain or branched as well as graft polymers and copolymers, including core-shell graft copolymers, and are characterized as having incorporated therein either by copolymerization or by grafting on the performed polymer, a monomer having functional and/or active or highly polar groupings capable of interacting with or adhering to the polyamide matrix so as to enhance the toughness of the polyamide polymer.

It is also within the scope of the instant invention to employ compatibilization agents in the blends. Such compatibilization agents include, for instance, compounds selected from the group consisting of tetracarboxylic acids of aromatic and aliphatic compounds, alicyclic compounds, dianhydride derivatives and halogen substituted phthalic anhydrides. A more detailed description of blend compatibilization may be found in U.S. Patent 4,826,933, the disclosure of which is incorporated herein by reference.

The blending ratio of polyphenylene ether units to polyamide is about 5 to about 99.5% by weight, preferably about 30 to about 70% by weight of the former to about 0.5 to about 95% by weight, preferably about 70 to about 30% by weight of the latter.

The method for producing the blend compositions of the present invention is not particularly limited, and the conventional methods are satisfactorily employed. Generally, however, melt blending methods are desirable. The time and temperature required for melt-blending are not particularly limited, and they can properly be determined according to the composition of the material. The temperature varies somewhat with the blending ratio of the polyphenylene ether to polyamide, but it is generally within a range of 270° to 350°C. A prolonged time and/or a high shear rate is desirable for mixing, but the deterioration of the resin composition advances. Consequently, the time needs to be determined taking into account these points.

Any of the melt-blending methods may be used, if it can handle a molten viscous mass. The method may be applied in either a batchwise form or a continuous form. Specifically, extruders, Bambury mixers, rollers, kneaders and the like may be employed.

It is within the scope of the invention to include in the blending step elastomeric impact modifiers compatible with either or both of the polyphenylene ether and the polyamide.

Impact modifiers for polyphenylene ether-polyamide compositions are well known in the art. They are typically derived from one or more monomers selected from the group consisting of olefins, vinyl aromatic monomers, acrylic and alkylacrylic acids and their ester derivatives as well as conjugated dienes. Especially preferred impact modifiers are the rubbery high-molecular weight materials including natural and synthetic polymeric materials showing elasticity at room temperature. They include both homopolymers and copolymers, including random, block, radial block, graft and core-shell copolymers as well as combinations thereof.

A particularly useful class of impact modifiers comprises the AB (diblock) and ABA (triblock) copolymers and core-shell graft copolymers of alkenylaromatic and diene compounds, especially those comprising styrene and butadiene or isoprene blocks. The conjugated diene blocks may be partially or entirely hydrogenated, whereupon they may be represented as ethylene-propylene blocks or the like and have properties similar to those of olefin block copolymers. Examples of triblock copolymers of this type are polystyrene-polybutadiene-polystyrene (SBS), hydrogenated polystyrene-polybutadiene-polystyrene (SEBS), polystyrene-polyisoprene-polystyrene (SIS), poly(a-methylstyrene)-polybutadiene-poly(a-methylstyrene) and poly(a-methylstyrene)-polyisoprene-poly(a-methylstyrene). Particularly preferred triblock copolymers are available commercially as CARIFLEX®, KRATON D® and KRATON G® from Shell.

Also suitable as impact modifiers are the ionomer resins, which may be wholly or partially neutralized with metal ions, and the core-shell type graft copolymers. In general, the latter have a predominantly conjugated diene or crosslinked acrylate rubbery core and one or more shells polymerized thereon and derived from monoalkenylaromatic and/or acrylic monomers alone or in combination with other vinyl monomers. Included are copolymers wherein an interpenetrating network of the resins employed characterizes the interface between the core and shell, such as those available from General Electric Company and described in U.S. Patent 3,944,631.

Other impact modifiers include the above-described types containing units having polar groups or active functional groups, as well as miscellaneous polymers such as Thiokol rubber, polysulfide rubber, polyurethane rubber, polyether rubber (e.g., polypropylene oxide), epichlorohydrin rubber, ethylene-propylene rubber, thermoplastic polyester elastomers and thermoplastic ether-ester elastomers.

The compositions of this invention may also contain conventional ingredients such as fillers, flame retardants, pigments, dyes, stabilizers, anti-static agents, crystallization aids, mold release agents and the like, as well as resinous components not previously discussed.

Additionally, the immiscible polyamide blends may further comprise, for instance, functionalized polyphenylene ethers, polycarboxylic acids, ester groups, epoxy groups, anhydride groups, rubbers or any other conventional moiety employed to improve the properties of the immiscible blend.

The following example illustrates and facilitates the production of the ultraviolet light stabilized polymer compositions of the instant invention. The molecular structure of the product may be confirmed by proton and carbon-13 nuclear magnetic resonance spectroscopy.

**Example**

Ultraviolet light stabilized polymer composition granulates were prepared by tumble mixing and extruding at 290 °C 45g of polyphenylene ether, 45g of Nylon 6/6, 10g of methacrylate butadiene styrene (MBS impact modifier), 0.3g of octadecyl-3-(3,5-ditertiarybutyl-4-hydroxyphenol)propionate, 3g of titanium dioxide, 1g of bis(1-octyloxy-2,2,6,6-tetramethyl-4-piperidinyl) and 1g of bis-methylene aminocyanoacrylate ester. The granulates were subsequently heated to 300 °C and molded to form 4" x 8" xx 1/8" stabilized polymer composition plates.

The data in the following table has been compiled to demonstrate the new and unexpected superior properties of the compositions of the instant invention. Said new and unexpected results are the result of the synergistic effect of the hindered amines and ultraviolet light absorbing agents in the compositions.

**TABLE**

| Entry[A] | Hindered Amine | Ultraviolet Light Absorbing Agent | Total Color Change After Time[B] 100 hrs | 300 hrs | 500 hrs | YI[E] 100 hrs | 300 hrs | 500 hrs |
|---|---|---|---|---|---|---|---|---|
| 1 | .No | No | 7.0 | 7.0 | 6.0 | 52 | 51 | 49 |
| 2 | Yes | No | 3.0 | 2.8 | 2.2 | 45 | 43 | 42 |
| 3 | Yes | Yes | 1.6 | 1.7 | 1.9 | 43 | 42 | 38 |
| 4[C] | Yes | Yes | 4.2 | 4.3 | 3.0 | 47 | 47 | 44 |
| 5[D] | Yes | Yes | 3.9 | 5.9 | 3.9 | 46 | 50 | 44 |

[A] All entries were prepared in the manner similar to the one described in the example.

[B] Total color change is based on the CIE LAB Test (DIN 6174) after 100, 300 and 500 hours of exposure of the polymer composition plates to ultraviolet light in the Xenotest 450 apparatus at 80°C.

[C] The ultraviolet light absorbing agent employed in this entry was ethyl-2-cyano-3,3-diphenyl acrylate.

[D] The ultraviolet light absorbing agent employed in this entry was a methacrylate ester of 2-hydroxy 4-(2-hydroxyethoxy)benzophenone.

[E] Yellowness indices upon exposure to a Xenotest 450 apparatus at 80°C after 100, 300 and 500 hours depict improved ultraviolet light stability for the compositions of the instant invention.

## Claims

1. A polymer composition comprising:
   (a) an blend comprising polyamides and polyphenylene ether based compositions and at least one member selected from the group consisting of:
   (b) a hindered amine; and

(c) a bis-alkylene aminocyanoacrylate ester.

2. A polymer composition in accordance with claim 1 wherein said hindered amine has the formula

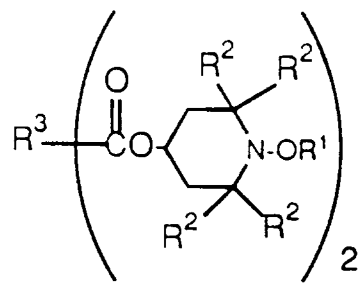

and $R^1$ is a $C_{4-12}$ alkyl, each R + 2 is independently a $C_{1-5}$ primary alkyl and $R^3$ is a $C_{4-12}$ alkylene.

3. A polymer composition in accordance with claim 2 wherein said hindered amine is bis(1-octyloxxy-2,2,6,6-tetramethyl-4-piperidinyl)sebacate.

4. A polymer composition in accordance with claim 1 wherein said bis-alkylene aminocyanoacrylate ester has the formula

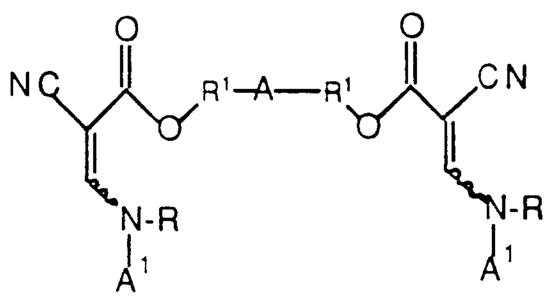

,

wherein A is a monocyclic or polycyclic alkane and each $A^1$ is independently a substituted or unsubstituted aromatic radical and each R is independently a $C_{1-5}$ alkyl group and each $R^1$ is independently propylene or butylene.

5. A polymer composition in accordance with claim 4 wherein A is cyclohexane and $A^1$ is a phenyl group and R is hydrogen and $R^1$ is methylene.

6. A polymer composition in accordance with claim 1 wherein said polyphenylene ether based compositions and polyamides are in a ratio from about 5 to about 99.5% by weight of the former and about 0.5 to about 95% by weight of the latter.

7. A polymer composition in accordance with claim 1 wherein said polyphenylene ether based compositions and polyamides are in a ratio from about 30 to about 70% by weight of the former and about 70 to about 30% by weight of the latter.

8. A polymer composition in accordance with claim 1 wherein said polyamide is polyamide-6/6.

9. A polymer composition in accordance with claim 1 wherein said hindered amines comprise less than about 5% by weight of the total weight of the polymer composition.

10. A polymer composition in accordance with claim 9 wherein said hindered amine comprises from about 0.01 to about 3.0% by weight of the total weight of the polymer composition.

11. A polymer composition in accordance with claim 1 wherein said bis-alkylene aminocyanoacrylate ester comprises less than about 5% by weight of the total weight of the polymer composition.

12. A polymer composition in accordance with claim 11 wherein said bis-alkylene aminocyanoacrylate ester comprises from about 0.01 to about 3.0% by weight of the total weight of the polymer composition.